(19)

Europäisches
Patentamt
European
Patent Office
Office européen
des brevets

(11) **EP 4 062 864 A1**

(12) **EUROPEAN PATENT APPLICATION**

(43) Date of publication:
**28.09.2022 Bulletin 2022/39**

(21) Application number: **21305387.9**

(22) Date of filing: **26.03.2021**

(51) International Patent Classification (IPC):
***A61C 7/20*** (2006.01)     ***B21F 1/00*** (2006.01)

(52) Cooperative Patent Classification (CPC):
**A61C 7/20; B21F 1/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Winnove Medical SAS
35510 Cesson-Sévigné (FR)**

(72) Inventor: **HARRABI, Firas
35700 Rennes (FR)**

(74) Representative: **Icosa
83 avenue Denfert-Rochereau
75014 Paris (FR)**

(54) **ORTHODONTIC WIRE BENDING DEVICE AND METHOD**

(57) The present invention relates to an orthodontic wire bending device comprising a wire guiding unit and a wire bending unit; the wire guiding unit comprising a convoying system and an exit, and the wire bending unit comprising two wire bending members able to turn around a center of rotation, such that, when the wire comes out of the exit of the wire guiding unit a rotation of at least one of the bending members around the center of rotation results in the bending of the wire.

**FIG. 2**

# Description

## FIELD OF INVENTION

The present invention pertains to the field of robotic dentistry. In particular, the invention relates to an orthodontic archwire bending robot.

## BACKGROUND OF INVENTION

In the production of custom-made orthodontic appliances, such as orthodontic archwires, elevated precision and accuracy are essential.

In this context, orthodontic archwire bending robots allow to produce customize archwires with higher accuracy, and more rapidly, when compared to the manual archwire shaping performed by orthodontists.

In addition to ensuring precision and accuracy, the archwire manufacturing process should not create defects on the surface of the archwire. Defects negatively affect the mechanical properties of the wire and may lead to crack formation. Once the archwire is in place, the mechanical solicitation (due to biting, chewing,...) and the acidic environment of the oral cavity may facilitate and accelerate crack propagation, thereby causing premature fracture of the archwire.

Most orthodontic archwire bending robots comprise at least one gripping tool for holding the wire to be bent in the desired shape.

In some instances, two gripping tools are provided, relatively moveable to each other, so as to hold and bend the wire at the same time.

In such systems, the friction between the fingers of the gripping tool and the wire may generate high local stress and surface defects.

Furthermore, an elevated pressure of the grippers on the wire may negatively affect the elasto-plastic properties of the wire.

In addition to the adverse effect on the wire, grippers are also associated with intrinsic limitations: over time, due to wear, the fingers of the gripping tools tend to move and to be spaced apart one from the other. Thus, the distance between the fingers and the force applied by the fingers on the wire to deviate from the nominal gripper stroke and gripping force, respectively, which ultimately leads to a loss of precision. This effect is more frequently observed at high bending angles.

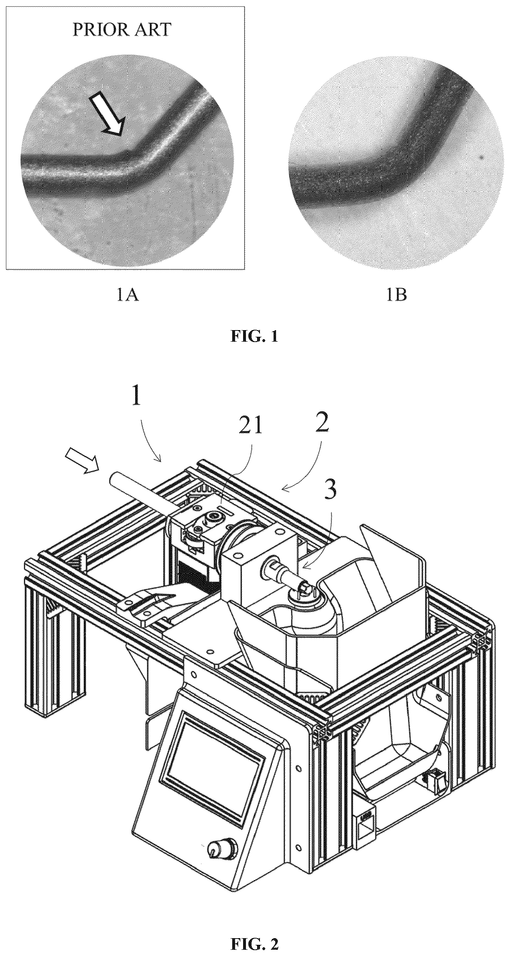

Some attempts have been made to provide gripper-free orthodontic wire bending robots. However, in most cases surface defects are still frequently observed, especially at the inside bend. Figure 1A illustrates a magnification of a bent portion of a wire in which surface defects (wrinkles) have been created in the inside bend.

Therefore, there is a need for a bending robot for producing orthodontic archwire in an accurate and rapid manner, and which is resistant to fatigue wear.

## SUMMARY

It is an objective of the present invention to provide an orthodontic archwire bending robot and an archwire manufacturing process which overcomes the intrinsic limitations of the prior art.

More in particular, the present invention aims to provide orthodontic archwires without surface defects, as illustrated in **figure 1B,** and with an improved mechanical behavior and durability, so as to avoid the premature fracture of the archwire.

It is also an objective of the present invention to provide an orthodontic archwire bending robot of compact dimensions, which can be easily manufactured and installed in an orthodontist's office.

The present invention thus relates to an orthodontic wire bending device comprising:

- a wire guiding unit comprising a convoying system for driving the wire and an exit for delivering the wire, the wire guiding unit being configured to guide the wire in a first direction along a longitudinal axis through the exit, and
- a wire bending unit fed by the wire delivered by the exit, comprising two wire bending members, each wire bending member being able to turn around a center of rotation in a first plane including the longitudinal axis, such that, when the wire comes out of the exit, a rotation of at least one of the bending members around the center of rotation results in the bending of the wire proximate to the nozzle,

wherein the exit of the wire guiding unit is located, along the first direction, beyond the center of rotation.

The present invention allows to minimize the distance between the exit of the wire guiding unit and the bending members. Thus, for a given bending moment, the force applied by the bending members to the wire is maximized, resulting in a quicker, more efficient and precise bending of the wire. This also allows more precise three-dimensional bending of the wire as the case may be.

In one embodiment, the exit is a nozzle, preferably a removable nozzle. Advantageously, this embodiment allows to employ different nozzles having different cross-sections as needed.

A rotation of the bending members of an angle $\alpha$ results in the bending of the wire of an angle $\beta$ wherein the relationship between $\alpha$ and $\beta$ is given by the following equation:

$$\tan(\beta) = \frac{sin(\alpha)}{\cos(\alpha) - \frac{d}{R}},$$

in which d is the distance between the center of rotation and the exit, and R is the distance between the center of rotation and each wire bending member.

In one embodiment, the convoying system is capable of rotating about the longitudinal axis, so as to rotate the wire about the longitudinal axis. This feature allows three-dimensional bending of the wire. Moreover, it is possible to obtain the wire translation and rotation within a single system, thereby reducing the dimensions of the orthodontic wire bending device.

In one embodiment, the wire guiding unit comprises a tube configured to house and guide the wire.

In one embodiment, the tube comprises:

a. an external cover, preferably made up of a metal or alloy material and
b. an inner sheath, preferably made up of a medical grade thermoplastic elastomer.

Thus, the wire may be convoyed safely until the exit.

In one embodiment, the exit has an inner surface having an inner radius, an outer surface, and a bevel extending from the inner surface to outer surface, the bevel having a radius of curvature which is equal or less than the inner radius. The presence of the bevel avoids the creation of surface defects in the inside bend of the wire. In an embodiment, the exit may have a circular cross-section and the radius of curvature of the bevel may be constant. Alternatively, the exit may have a squared cross-section with at least two different bevels having two different radii of curvature. In this alternative embodiment, it is possible to select the preferred bevel with a simple rotation.

In one embodiment, the wire bending unit comprises a plate capable of rotating about an axis of rotation perpendicular to the longitudinal axis, wherein the bending members protrude from said rotating plate. The bending members may be removable from the plate, so that different bending members may be used based on the wire characteristics and/or the archwire shape to be obtained.

In one embodiment, the wire guiding unit comprises a hollow body having a proximal end and a distal end, the hollow body being non-rotatably connected to the convoying system and being configured to receive, at its proximal end, the wire from the convoying system and to guide it along the first direction towards the wire bending unit. Thus, the wire advances inside the hollow body, and it is delivered to the exit, where it is exposed to the wire bending unit and it can be bent. In one embodiment, the hollow body is made up of a metal or alloy material which ensure a smooth advancement of the wire towards the exit, and prevent the onset of rotational frictions.

In one embodiment, the wire bending members are bending rods.

In one embodiment, each bending rod has a diameter which decreases along the protruding direction, preferably each rod comprises a first part of frustoconical shape and a second free part of cylindrical shape. The decreasing diameter allows to bend the wire so as to obtain any archwire shapes, while ensuring mechanical stability of the bending members.

In one embodiment, the wire bending unit further comprises a wire cutting member, preferably the wire cutting member is a rod having a sharp edge. In this embodiment, the wire cutting function is integrated in the wire bending unit, and there is no need to provide a separate wire cutting unit.

The present invention also relates to an orthodontic wire bending system comprising:

a. an orthodontic wire bending device according to any one of the embodiments described hereabove, the orthodontic wire bending device being responsive to control commands;
b. a driver assembly comprising a first driver operably connected to the wire guiding unit and configured to drive the wire in the guiding unit, and a second driver operably connected to the wire binding unit configured to drive in rotation the two bending members;
c. a programmable controller configured to send control commands to the drivers of the driver assembly, so as to operate the orthodontic bending device.

Advantageously, the controller allows to operate the different units of the orthodontic wire bending device so as to obtain the desired archwire shape.

In one embodiment, the controller is configured to receive, as input, a file comprising a list of bending instructions and to operate the orthodontic wire bending device on the basis of the bending instructions in the file. The bending instructions are obtained from a digital model of the desired archwire shape.

In one embodiment, the system further comprising a wire detection unit for detecting the presence of the wire, said wire detection unit being preferably installed between the exit of the wire guiding unit and the wire bending unit.

In on embodiment, the system comprises a human-machine interface connected to the controller. The human-machine interface may be used to visualize a three-dimensional model of a subject dentition, and to create a digital model of a customized archwire. The system may comprise a processor configured to convert the digital model of the customized archwire into bending instructions.

The present invention also relates to a method of manufacturing an orthodontic archwire with the orthodontic wire bending device according to any one of the embodiments described hereabove, the method comprising:

- guiding the wire through the wire guiding unit in a first direction along the longitudinal axis, and delivering the wire out of the wire guiding unit through the exit;

- feeding the wire bending unit with the wire delivered from the exit;
- rotating the wire bending members of a predefined angle α around the center of rotation so as to bend the wire.

This method allows to efficiently and accurately bend the wire, without introducing surface defects. Thus, the archwire which is obtained is more resistant to the mechanical solicitation and the acidic environment of the oral cavity.

**DEFINITIONS**

In the present invention, the following terms have the following meanings:

- **"first order bend"** refers to the bend of the wire in a plane which includes the line of occlusion, such as for instance: canine eminence bend, molar offset bend, antirotation bend.

- **"second order bend"** refers to the bend of the wire in a plane which includes the occluso-gingival direction, such as for instance: tip beck bend, V bend, artistic positioning bend.

- **"bending angle"** is the angle between the bent portion of the wire, *i.e.,* the segment of wire downstream of the bending unit; and the x-axis of the wire, *i.e.,* the longitudinal axis of the wire before bending.

- **"inside bend"** refers to the side of the wire which is compressed during bending.

- **"outside bend"** refers to the side of the wire which is under tension during bending.

- **"center of rotation"** herein refers to center of the circular arc trajectory which can be covered by the bending members 31, 32.

**DETAILED DESCRIPTION**

The following detailed description will be better understood when read in conjunction with the drawings. For the purpose of illustrating, the device is shown in the preferred embodiments. It should be understood, however that the application is not limited to the precise arrangements, structures, features, embodiments, and aspect shown. The drawings are not drawn to scale and are not intended to limit the scope of the claims to the embodiments depicted. Accordingly, it should be understood that where features mentioned in the appended claims are followed by reference signs, such signs are included solely for the purpose of enhancing the intelligibility of the claims and are in no way limiting on the scope of the claims.

The present invention relates to an orthodontic wire bending device 1 comprising a wire guiding unit 2, and a wire bending unit 3, as shown in **figure 2**.

In the following detailed description, the term "proximal" refers to an element, or the extremity of an element, which is closer to the wire guiding unit 1; whereas the term "distal" refers to an element, or an element extremity, which is closer to wire bending unit 3.

In the present invention, the wire guiding unit 2 comprises a convoying system 21 for driving the wire, and an exit 22 for delivering the wire. The wire guiding unit 2 is configured to guide the wire in a first direction (represented by the white arrow in **figure 2**) along a longitudinal axis x through the exit 22.

The wire bending unit 3 is configured to receive the wire w delivered by the exit of the wire guiding unit 1. Said wire bending unit 3 comprises two wire bending members 31, 32, which are capable of rotating around a center of rotation C in a first plane P including the longitudinal axis x.

When the wire comes out of the exit 22, a rotation of at least one of the bending members 31, 32 around the center of rotation C results in the bending of the wire w.

The wire advances through the device in a stepwise manner from the wire guiding unit 2 towards the wire bending unit 3, along the longitudinal axis x. After an advancement step, the wire is bent at the wire bending unit 3 of a first bending angle β. At the next advancement step, the wire may be bent at the wire bending unit 3 of a second bending angle, and so on, until the desired archwire shape is obtained.

**THE DEVICE**

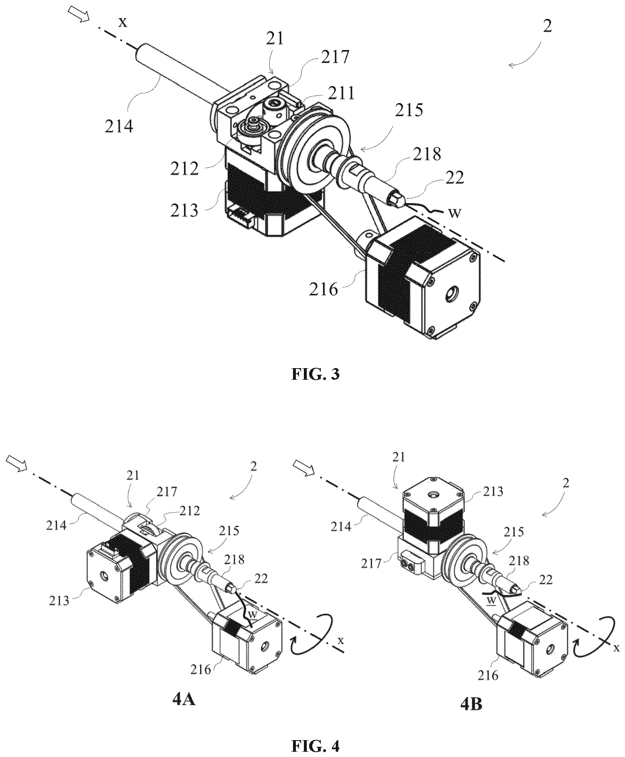

As illustrated in **figure 3,** the wire guiding unit 2 comprises a convoying system 21 for driving the wire w, and an exit 22 for delivering the wire.

In the wire guiding unit 2 illustrated in **figure 3,** the exit 22 is a nozzle. More in particular, the exit 22 is a nozzle having the shape of a composite solid: a proximal hexagonal prism and a distal cone.

The convoying system 21 may comprise a pair of rollers, or gears, capable of rotating about an axis perpendicular to the longitudinal axis x, so that, when the wire w passes in between the two rollers, the rotation of the rollers results in the wire advancement. Several transmission systems may be used to drive the rollers, or gears, in rotation: for instance, a motor may be connected to a driving gear via a shaft, or the rollers may be belt-driven.

**Figure 3** represents a perspective view of the wire guiding unit 2 of the present invention according to one particular embodiment in which the convoying system 21 comprises a driving roller 211, a driven roller 212, a motor 213 connected to the driving roller 211 and configured to drive the rollers 211, 212 in rotation, and a tube 214 placed upstream of said rollers.

In some embodiments, the wire guiding unit 2 comprises a tube 214 configured to house and guide the wire; which may be installed upstream, downstream of the convoying system 21, or inside the convoying system 21.

In one embodiment, the convoying system 21 is capable of rotating about the longitudinal axis x, so as to rotate the wire w about the axis x.

One example of a rotatable convoying system 21 according to the present invention is illustrated in **figure 3**. In this embodiment, the convoying system 21 is capable of rotating about the longitudinal axis x, as it can be driven in rotation by a belt and pulley assembly 215, connected to a motor 216. The convoying system 21 therein illustrated comprises a support element 217 on which the rollers 211, 212 and the motor 213 are mounted. The support element 217 is connected to the belt and pulley assembly 215 and it has the twofold function of bearing the rollers 211, 212 and the motor 213, and permitting the rotation of the convoying system 21 about the axis x.

With a rotatable convoying system 21 it is possible to simultaneously translate the wire along the longitudinal axis x, and rotate it about said axis.

If the convoying system 21 is driven in rotation about the longitudinal axis x during the wire advancement, consecutive bending angles β do not lie on the same bending plane. Thus, the rotation of the convoying system 21 allows to modify the bending plane at each advancement step of the wire, so as to provide a second order bending.

Advantageously, the total length to be covered by the wire is also reduced, because the wire translation and rotation are simultaneously obtained inside the wire guiding unit 2. With this embodiment, it is therefore possible to reduce the dimensions of the orthodontic wire bending device 1.

This would not be possible in a wire bending device in which the wire advancement and the wire rotation about the advancement direction are provided by separated components.

In one embodiment, the convoying system 21 is capable of rotating about the longitudinal axis x up to an angle of 180°. One example of this embodiment is illustrated in **figures 4A** and **4B.** In **figure 4A,** the wire guiding unit 2 is represented in a first configuration in which the rotation angle of the convoying system 21 is 90°, and in **figure 4B** it is represented in a second configuration in which the rotation angle is 180°.

Due to the presence of two bending members 31, 32, a rotation of the convoying system 21 of an angle comprised between 0° and 180° is sufficient to provide a second order bending. If the wire bending unit 3 comprised only one bending member, larger rotations, preferably up to 360°, would be needed, to provide a second order bending. However, larger rotations are not desirable as they would render the convoying system 21 more complex and less stable.

As aforementioned, the wire guiding unit 2 may comprise a tube 214 configured to house and guide the wire. Preferably, the tube 214 is made up of a metal or a metal alloy; more preferably, a medical grade metal or metal alloy.

Examples of suitable metals or a metal alloys comprise: stainless steel, aluminum, cobalt-chrome alloy, titanium, nickel-titanium alloy (nitinol). Preferably, the external cover is made up of a medical grade metal or alloy material.

In one embodiment, the tube 214 comprises an external cover and an inner sheath.

In one embodiment, the external cover is made up of a metal or a metal alloy.

In one embodiment, the inner sheath is a polymeric sheath.

In one embodiment, the inner sheath is made up of a thermoplastic elastomer, such as for instance thermoplastic urethane (TPU) elastomer, thermoplastic elastic olefin (TEO), styrene-ethylene-butylene-styrene (SEBS), polyether-ester block copolymers (COPE), thermoplastic polyether block amide (PEBA), or a combination thereof.

Preferably, the thermoplastic elastomer is a medical grade thermoplastic elastomer.

The wire guiding unit 2 may further comprise a hollow body 218 having an external surface and an internal surface defining an internal hollow portion. The hollow body 218 extends, along a direction parallel to the longitudinal axis x, from the convoying system 21 to the exit 22 so that the wire exiting from the convoying system 21, it enters the hollow body 218, it advances inside the internal hollow portion, and it is delivered to the exit 22 of the wire guiding unit 2. Here, the wire is exposed to the wire bending unit 3 and it can be bent by the bending members 31, 32.

In one embodiment, the hollow body 218 is made up of a metal or alloy material.

Metal or alloy materials prevent rotational friction that might result from rotation of the wire relative to the inner surface of the hollow body 218. This friction may increase the risk of crack formation, and cause energy losses.

As aforementioned, the wire guiding unit 2 comprise an exit 22 which is located, along the first direction, beyond the center of rotation C of the bending members 31, 32.

In one embodiment, the exit 22 is a nozzle, preferably a removable nozzle. This embodiment allows to employ different nozzles having different cross-sections. It is therefore possible to selected the nozzle whose cross-section is optimized to the cross-section of the wire being used and/or to the archwire shape to be obtained.

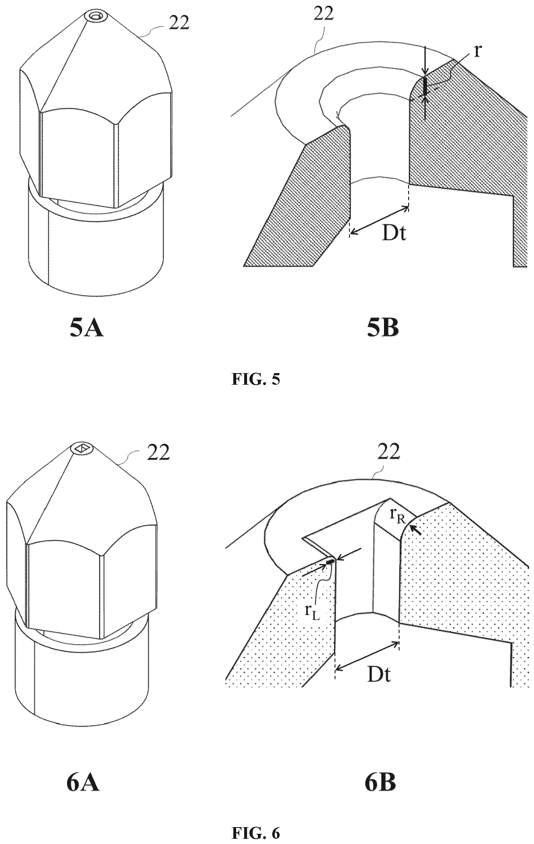

In one embodiment, the inner surface of the exit 22 has a circular or elliptical cross-section, as shown in **figure 5.**

In one embodiment, the exit 22 has an inner surface which is beveled.

The presence of the bevel ensures that the wire, during bending, does not face sharp edges. Sharp edges may cause surface defects such as wrinkles in the inside bend of the wire w.

The exit 22 has an inner surface having an inner diameter Dt, an outer surface. By having an inner surface which is beveled, it is meant that a bevel extends from the inner surface to the outer surface, with a radius of curvature r. Preferably, the radius of curvature r is equal or less than the radius of the inner surface Dt/2.

In one embodiment, the radius of curvature r of the bevel is constant, as shown in **figure 5.**

Alternatively, the radius of curvature may be variable. For instance, the exit 22 of **figure 6** is a nozzle whose inner surface has a squared cross-section, in which two opposite sides are not beveled, *i.e.* they have a zero radius of curvature, and the other two opposite sides are beveled, *i.e.* they have a non-zero radius of curvature. The radius of curvature of the beveled sides may be identical or, as illustrated in **figure 6B,** it may differ. In this particular embodiment, the radius of curvature $r_R$ of the right-side bevel is larger than the radius of curvature $r_L$ of the left side bevel.

Having a variable radius of curvature allows to obtain, with a single exit 22, different bend radius. For instance, with the nozzle of **figure 6,** it is possible to provide smaller bend radius by using the bending member 31 which would bend the wire w toward the left side of the exit 22, and larger bend radius by using the other bending member 32, as it would bend the wire toward the right side of the exit 22.

In one embodiment, the inner surface of the exit 22 has a square or rectangular cross-section, as shown in **figure 6.**

If the cross-section of the inner surface is not circular, by inner diameter Dt it is meant the shortest dimension of the cross-section, for instance the length of one side for a square cross-section, or the minor axis for an elliptical cross-section.

In one embodiment, the exit 22 is tapered, *i.e.* it has an inner surface having a constant inner diameter Dt, and an outer surface having an outer diameter which decreases along the first direction. Examples of this embodiment are visible in **figures 5** and **6.** In these embodiments, the exit 22 has a hollow frustoconical shape.

The orthodontic wire bending device 1 according to the present invention further comprises a wire bending unit 3 configured to receive the wire w delivered by the exit 22 of the wire guiding unit 2 and comprising two bending members 31, 32.

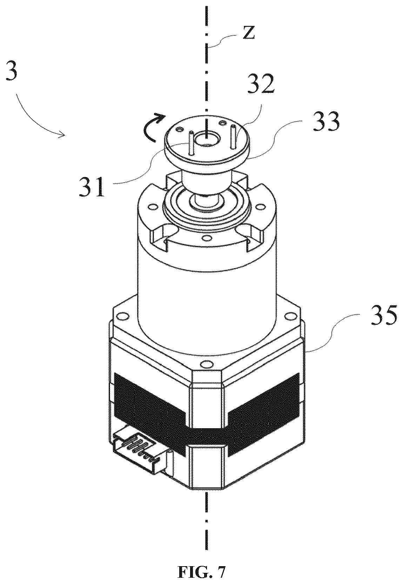

The wire bending unit 3 is better shown in **figure 7.** In this particular embodiment, the two bending members 31, 32 may be mounted on the same support capable of rotating around the center of rotation C. Having the bending members 31, 32 mounted on the same support allows to reduce the dimensions of the bending unit 3.

Alternatively, the two bending members 31, 32 may be mounted on two distinct supports.

The support, hence the bending members 31, 32, may be driven in rotation by a motor 35, as shown in **figure 7.**

In one embodiment, the support is a plate 33.

In the embodiment illustrated in **figure 7,** the bending members 31, 32 are rods perpendicularly protruding from the plate 33.

The plate 33 is capable of rotating around a vertical axis z which is perpendicular to the longitudinal axis, and which includes the center of rotation. The bending members 31, 32 may be mounted so that they protrude from a surface of the plate 33. Thus, a rotation of the plate about the vertical axis results in the rotation of the bending members 31, 32 around the center of rotation C. One example of this embodiment is illustrated in **figure 2.** In this embodiment, the two wire bending members 31, 32 are cylindrical rods which protrude perpendicularly from the plate.

In one embodiment, the plate 33 is capable of rotating about the vertical axis z of an angle up to 180°.

The reference position of the plate 33 may be defined as the position in which the two wire bending members 31, 32 are at the same distance from the exit 22. In one embodiment, the plate 33 is capable of a clockwise rotation up to 90° and a counterclockwise rotation up to 90°, from the reference position.

As aforementioned, the first plane P includes the longitudinal axis x.

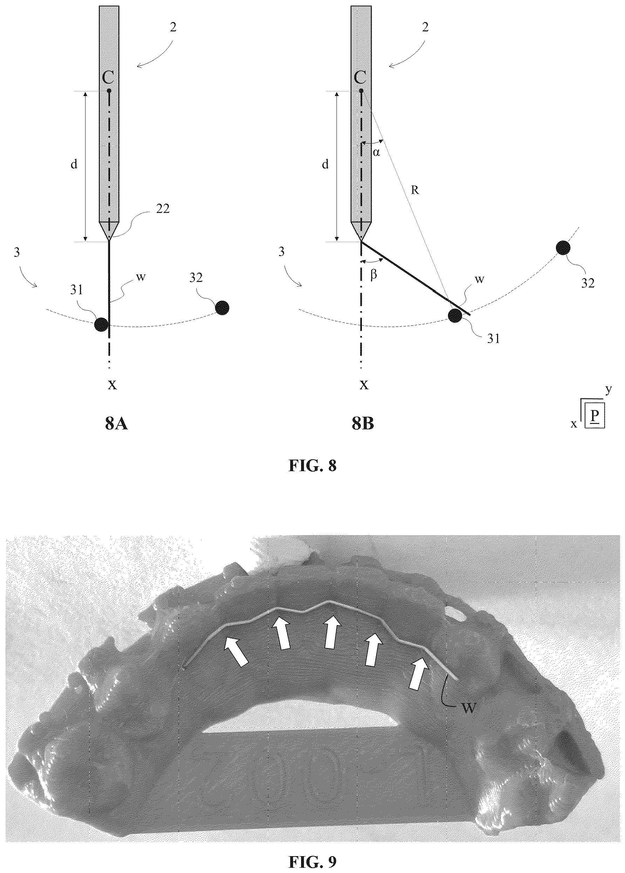

The plane P is better shown in **figure 8,** which illustrates a simplified top view of the wire guiding unit 2 and the wire bending unit 3 of the present invention on the plane P. The angles α and β, the distance R between the center of rotation C and the wire bending members 31, 32, and the distance d between the center of rotation C and the exit are also represented.

As shown in shown in **figure 8,** when the wire w comes out of the exit 22, a rotation of at least one of the bending members 31, 32 around the center of rotation C results in the bending of the wire w.

More in particular, the wire w advances through the device in a stepwise manner from the wire guiding unit 2 towards the wire bending unit 3, along the longitudinal axis x. After an advancement step, the wire w is bent at the wire bending unit 3. Indeed, the rotation of the wire bending members 31, 32 of an angle α results in the bending of the wire of a bending angle β, and the relationship between the angles α and β is given by equation e1:

$$\tan(\beta) = \frac{sin(\alpha)}{cos(\alpha) - \frac{d}{R}} \quad (e1)$$

By bending angle β, it is meant the angle between the longitudinal axis x and the bent portion of the wire, which has as vertex the exit of the wire guiding unit 1.

At the next advancement step, the wire may be bent at the wire bending unit 3 of a second bending angle, and so on, until the desired archwire shape is obtained.

As shown in **figure 8,** in the present invention, the exit 22 of the wire guiding unit 2 is located, along the first direction, beyond the center of rotation C.

Therefore, according to a coordinate system originating in the center of rotation C, and having as horizontal axis the longitudinal axis x, the abscissa of the exit 22 is positive.

Advantageously, this embodiment allows to minimize the distance between the exit 22 of the wire guiding unit 2 and the bending members 31, 32. Thus, for a given bending moment, the force applied by the bending members 31, 32 to the wire w is maximized.

The presence of two bending members 31, 32 allows to obtain large bending angles β with small angular displacements α of the bending members 31, 32. In the example illustrated in **figure 8,** the bending members 31, 32 are rotated in a counterclockwise manner to bend the wire and pass from **figure 8A** to **figure 8B.,** so that the wire can be bent by the first bending member 31. From the configuration of **figure 8B,** to bend the wire in the opposite direction, it is sufficient to rotate the bending members 31, 32 in a clockwise manner, so as to bend the wire with the second bending member 32.

If the bending unit 3 comprised only the first bending member 31, then a whole clockwise rotation of the bending member 31 would be necessary in order to bend the wire in the opposite direction, which would render the device slower. Therefore, this solution is not optimal.

Alternatively, the bending unit 3 comprising only one bending member 31 should be configured to ensure the translation of the bending member 31 in a vertical direction, perpendicular to the plane of the rotation. In this manner, after bending one side of the wire, the bending member 31 may be moved away from the bent side, and moved to the other wire side along a trajectory which is shorter than a whole rotation. This alternative would require the bending unit 3 to have a higher number of degrees of freedom (DOFs) since it should ensure: (i) the rotation around the center C and (ii) the translation, for instance along a vertical direction, of the bending member 31.

However, a higher number of DOFs requires more complicated and expensive drivers associated to the bending unit 3. Furthermore, more DOFs generate more disturbances, notably more backlashes, which negatively affect the stability of the bending unit 3, and make it more difficult to control the bending force. Therefore, this solution is not optimal either.

Advantageously, in the present invention the presence of two bending members 31, 32 allows to bend the wire of large bending angles β, while reducing the angular displacements α of the bending members 31, 32 and the number of DOFs of the bending unit 3.

As aforementioned, the two bending members 31, 32 are able to turn around a center of rotation C in the first plane P. Advantageously, having the rotation of the bending members 31, 32 in the plane P, which includes the longitudinal axis x, allows to reduce the dimensions of the wire bending unit 3. Furthermore, it allows to bend the wire w more rapidly, when compared to a coaxial bending unit, i.e. a bending unit in which the bending members rotate in a plane perpendicular to the plane in which the longitudinal axis lies.

Indeed, a coaxial bending unit would require a large distance between the center of rotation C and the bending members 31, 32, because the wire guiding unit 2 indeed would act as a physical obstacle, precluding the possibility to have the bending members proximate to the exit 22.

A large distance between the center of rotation C and the bending members 31, 32, should be avoided because (i) the bending unit 3, and hence the orthodontic wire bending device 1, would occupy a large volume and (ii) the bending members 31, 32 would require more time to reach the wire to be bent.

The rotation of the support of the bending unit 3, allows to move the wire bending members 31, 32 along a circular arc trajectory. In **figure 8,** the dashed line represents a portion of the trajectory which can be covered by the bending members 31, 32.

The diameter of the bending members 31, 32 is comprised between 0,1 mm and 100 mm.

Preferably, the diameter of the bending members 31, 32 is at least 0,3 mm.

In one embodiment, the diameter of the bending members 31, 32 is comprised between 0,3 mm and 5 mm. Such diameters allow to obtain small inside bend radius, which are especially needed to reproduce the contour of the interproximal space i.e., the space between adjacent teeth in a dental arch.

In one embodiment, the angular distance between the two bending members 31, 32 is comprised between 10° and 170°.

Preferably, the angular distance between the two bending members 31, 32 is comprised between 45° and 120°; more preferably, it is equal to 90°.

Advantageously, the combination of: (i) the angular distances between the bending members 31, 32 and (ii) the diameter of said bending members 31, 32, allows to obtain an archwire which reproduces the shape of the interproximal space, indicated by the white arrows in **figure 9.** Indeed, the contour of the teeth comprises a series of concavities and convexities which are smooth on the surface of the teeth. In the interproximal spaces, such concavities and convexities become harsh, and the contour of the teeth displays sharper angles. Most archwire reproduce the contour of each tooth with sufficient fidelity, but they are unable to fit inside the interproximal spaces, because of the difficulty of obtaining such sharp angles with the conventional archwire manufacturing process. As it can be appreciated in **figure 9,** the archwire obtained with the present invention is a three-dimensional archwire.

Inversely, in the present invention, the distance between the bending members 31, 32 and their shape allows to accurately reproduce such interproximal spaces, without creating surface defects (such as wrinkles) on the wire w.

In one embodiment, the bending members 31, 32 have a conical shape.

In one embodiment, the bending members 31, 32 have a cylindrical shape.

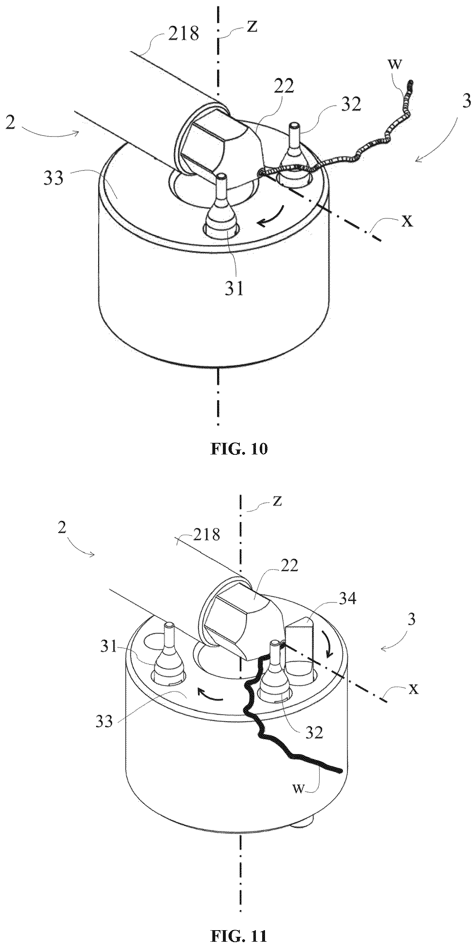

In one embodiment, the bending members 31,32 have the shape of a composite solid. The edges shared by adjacent solids may be beveled, as illustrated for instance in **figure 10.**

The decreasing diameter allows to provide a bending member which has a smaller diameter at its free end, and which has a larger diameter at its base. Advantageously, this embodiment allows to obtain all the relevant archwire shapes, while ensuring mechanical stability to the bending members 31, 32, due to the larger base.

In one embodiment, the two bending members 31, 32 have the same shape.

In one embodiment, the two bending members 31, 32 have different shapes.

In the examples illustrated in **figure 10,** the bending members 31, 32 protrudes from a rotating plate 33, and their diameter decreases along the protruding direction. More in particular, these bending members 31, 32 have the shape of a composite solid comprising, along a direction protruding from the rotating plate 33: a first cylinder, a truncated cone, and a second cylinder, with a diameter smaller than that of the first cylinder.

In one embodiment, the bending members 31, 32 are not detachable from their rotating support. For instance, they may have an extremity which is embedded in the rotating support, they may be integrally manufactured with the rotating support or they may be attached to it.

In one embodiment, the bending members 31, 32 are removable, *i.e.,* they can be detached from their rotating support. For instance, they may have an extremity which is screwed, or snap-fitted in the rotating support; or they may be mounted on the rotating support with any other reversible attachment method.

Advantageously, this embodiment allows to remove and replace the bending members 31, 32. Different bending members having different shapes can be used. Of note, the types and number of final archwire shape which can be obtained depends on the shape of the bending members 31, 32. Therefore, with this embodiment it is possible to use the same orthodontic bending device 1 for manufacturing a wide number of archwire: it is sufficient to mount the bending members 31, 32 whose shape is optimized for the archwire to be manufactured.

In one embodiment, the present bending device further comprises a wire cutting member 34 for cutting the wire.

Preferably, the wire bending members 31, 32 and the wire cutting member 34 are mounted on the same support. More preferably, they are mounted on a rotating plate 33 so that they protrude from a surface of the rotating plate 33, as shown in **figure 11.**

In one embodiment, the cutting member 34 and the wire bending members 31, 32 perpendicularly protrude from the rotating plate 33.

For efficiently cutting the wire, the cutting member 34 may be made of a material having a high hardness. For instance, it may be made of hardened steel.

In one embodiment, the cutting member 34 has a flat surface 341 provided with a sharp edge for cutting the wire. In one embodiment, the cutting member is capable of rotating around the center of rotation C, and the flat surface 341 is configured to be tangential to the exit 22 when the cutting member lies on the longitudinal axis.

In one embodiment, the wire cutting member 34 is not equidistant to the two bending rods. Preferably, the wire cutting member 34 is at an angular distance larger than 90° from the first bending member 31, and at an angular distance smaller than 45° from the second bending member 32, or vice-versa. One example of this embodiment is illustrated in **figure 11.**

Having the wire cutting member 34 in proximity of one of the bending members 31, 32 allows to cut the wire right after the last bending operation. Moreover, a small rotation of the wire cutting member 34 is sufficient to cut the wire due to (i) the proximity of the cutting member 34 with one of the bending members 31, 32, combined with (ii) the presence of a flat surface 341 which is tangential to the exit 22 when the cutting member 34 lies on the longitudinal axis.

In one embodiment, the rotation of the cutting member 34 needed to cut the wire is smaller than 20°; preferably, smaller than 15°.

## THE SYSTEM

The present invention also relates to an orthodontic wire bending system comprising:

> d. an orthodontic wire bending device 1 according to any one of the embodiments described hereabove, the orthodontic wire bending device 1 being responsive to control commands;
> e. a driver assembly comprising a first driver 213 operably connected to the wire guiding unit 2 and configured to drive the wire in the guiding unit, and a second driver 35 operably connected to the wire binding unit 3 configured to drive in rotation the two bending members 32,33;
> f. a programmable controller configured to send control commands to the drivers of the driver assembly, so as to operate the orthodontic bending device 1.

In one embodiment, the orthodontic wire bending system further comprises a wire detection unit for detecting the presence of the wire.

In one embodiment, the wire detection unit is installed between the wire guiding unit 2 and the wire bending unit 3. Preferably, the wire detection unit is installed between the exit 22 and the wire bending unit 3.

In one embodiment, the wire detection unit comprises a camera.

In one embodiment, the wire detection unit comprises an electrical circuit and a sensor for measuring the electrical current along said electrical circuit, so as to detect electrical current variations due to the presence or absence of the wire.

In one embodiment, the controller of the orthodontic wire bending system comprises the hardware and software for controlling the drivers which drive the wire guiding unit 2 and the wire bending unit 3, *i.e.* the motors 213, 35. The programmable controller may further control a motor 216 for rotating the convoying system 21.

In one embodiment, the controller receives, as input, a file comprising a list of bending instructions. The controller operates the bending device 1 on the basis of the bending instructions in the file.

In one embodiment, the controller is configured to receive the file with the bending instructions from an external source.

In on embodiment, the orthodontic bending device comprises a human-machine interface connected to the controller, and the human-machine interface comprises a display and an input device, as shown in **figure 2.**

In one embodiment, the controller comprises a processor configured to execute a computer program for generating said bending instructions, and a storage medium for storing a file comprising said instructions.

The processor may be configured to receive radiological images representing the dentition of a subject, and the computer program may be configured to:

- generate a digital representation of the dentition of the subject, on the basis of the radiological images;
- receive a user input from the human-machine interface;
- generate a three-dimensional model of a custom orthodontic archwire, on the basis of the three-dimensional model of the subject dentition and the user input;
- converting the three-dimensional model into bending instructions.

In one embodiment, the user input comprises a list of anatomical locations representing the desired position of bracket bodies.

In one embodiment, the user input comprises a list of anatomical locations representing interproximal spaces.

In one embodiment, the computer program is further configured to verify the feasibility of the bending instructions and:

- if the instructions can be executed by the bending device:

    ○ generate a file comprising the bending instructions;
    ○ send the file comprising the bending instructions to the controller;

- if the instructions cannot be executed by the bending device:

    ○ display an error message on the display of the human-machine interface.

In one embodiment, the file comprising the bending instructions is a .STL file.

**THE METHOD**

The present invention also relates to a method of manufacturing an orthodontic archwire with the orthodontic wire bending device 1 according to any one of the embodiments described hereinabove.

According to a first aspect, the manufacturing method comprises:

- guiding the wire through the wire guiding unit 2 in a first direction along the longitudinal axis, and delivering the wire out of the wire guiding unit 2 through the exit 22;
- feeding the wire bending unit 3 with the wire delivered from the exit 22;
- rotating the wire bending members 31, 32 of a predefined angle α around the center of rotation C so as to bend the wire.

According to a second aspect, the method is a method for designing and manufacturing an orthodontic archwire, the method comprising:

- receiving radiological images representing the dentition of a subject;
- generating a digital representation of the subject dentition, on the basis of the radiological images;
- receiving a user input;
- generate a three-dimensional model of a custom orthodontic archwire, on the basis of the three-dimensional model of the subject dentition and the user input;
- converting the three-dimensional model into bending instructions;
- creating a file comprising the bending instructions;
- sending the file comprising the bending instructions to a controller of the orthodontic bending device 1;
- operating, by means of the controller, a driver assembly comprising at least a first driver 213 operably connected to the wire guiding unit 2 and configured to drive the wire in the guiding unit, and a second driver 35 operably connected to the wire binding unit 3 and configured to drive in rotation the two bending members 32,33, on the basis of the bending instructions in the file;

wherein the steps of the method are computer-implemented.

As aforementioned, the convoying system 21 may be capable of rotating about the longitudinal axis. In this embodiment, the controller may further operate a motor 216 configured to drive in rotation said convoying system 21.

The present orthodontic archwire manufacturing method allows to:

a) advance the wire along a first direction parallel to the longitudinal axis;
b) rotate the wire about the longitudinal axis;
c) bend the wire;

and to perform a), b) and c) in a succession or simultaneously.

According to a third aspect, the method of the present invention is further for cutting an archwire manufactured with the orthodontic bending device 1.

The cutting of the archwire comprises:

- rotating a cutting member 34 having a flat surface 341 around the center of rotation C, so as to bring the cutting member in contact with the archwire at the exit 22;
- further rotating the cutting member 34 such that a sharp edge of the flat surface 341 slides on the exit 22, thereby cutting the archwire.

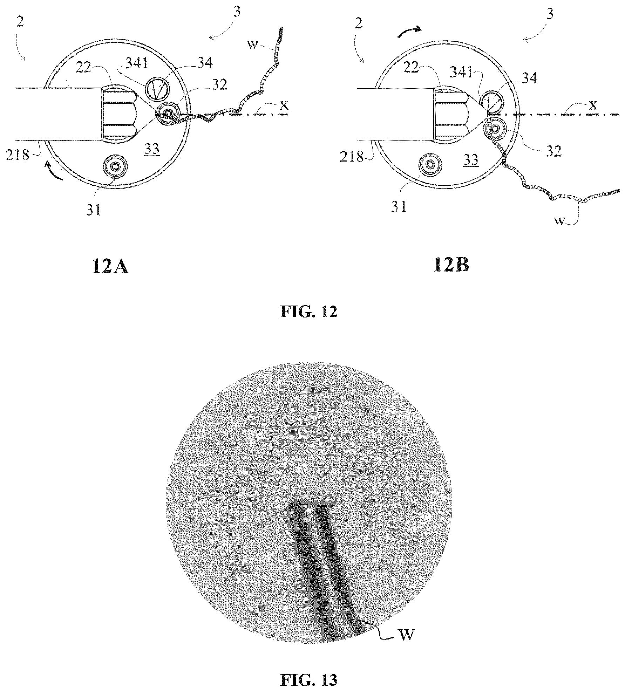

The rotation of the cutting member 34 which allows to cut the archwire is better shown in **figure 12.**

In the embodiment of **figure 12,** the bending members 31, 32 and the cutting member 34 are mounted on the same rotating plate 33. Alternatively, each of the bending members 31, 32 and the cutting member 34 may be mounted on an independent rotating support.

In this example, a clockwise rotation of the plate 33 comprising the bending members 31, 32 provides the last bending (**figure 12A**) to the wire w. Next, a second clockwise rotation brings the cutting member 34 in contact with the wire w (**figure 12B**). As shown in **figure 12B**, the flat surface 341 of the cutting member 34 is tangential to the exit 22, and it allows to cut the wire.

As illustrated in **figure 13**, the cutting member 34 allows to cut of the wire w precisely, and without damaging it.

While various embodiments have been described and illustrated, the detailed description is not to be construed as being limited hereto. Various modifications can be made to the embodiments by those skilled in the art without departing from the true spirit and scope of the disclosure as defined by the claims.

**BRIEF DESCRIPTION OF THE DRAWINGS**

**Figure 1** illustrates a 50X magnification of a bent portion of a wire obtained with the orthodontic wire bending device of the prior art (**figure 1A**) and that of a wire obtained with the present orthodontic wire bending device 1 (**figure 1B**). The white arrow indicates a surface defects of the wire obtained with a device of the prior art.

**Figure 2** represents a perspective view of an exemplary orthodontic wire bending system comprising the orthodontic wire bending device 1 with a wire guiding unit 2 and a wire bending unit 3, the wire guiding unit comprising a convoying system 21, the orthodontic wire bending system further comprising: a human-machine interface including a display and a knob; a recovery box mounted in front of the bending unit 3; and a frame.

**Figure 3** is a perspective view of the wire guiding unit 2 of the present invention according to a particular embodiment in which wire guiding unit 2 comprises:

- a tube 214,
- a convoying system 21 comprising a pair of rollers 211, 212 mounted on a support 217, and a first motor 213 for driving the rollers 211, 212 in rotation,
- a hollow body 218, and
- an exit 22;

wherein the convoying system 21 can be driven in rotation about the longitudinal axis by a belt and pulley assembly 215 connected to a second motor 216, and wherein the exit 22 is a nozzle comprising a prism shaped portion and a conical portion.

**Figure 4** is a perspective view of the wire guiding unit 2 and the wire bending unit 3 according to one embodiment in which the convoying system 21 is capable of rotating about the longitudinal axis of an angle up to 180°. In **figure 4A**, said convoying system 21 is rotated of 90° (from the reference position of **figure 3**), and in **figure 4B** the rotation angle is equal to 180°.

**Figure 5A** is a perspective view of the exit 22 of the wire guiding unit 2 according to one embodiment in which the exit 22 is a nozzle having a circular inner surface, said circular inner surface being beveled.

**Figure 5B** is a magnified sectional view of the nozzle of **figure 5A** showing the bevel of the circular inner surface, said bevel having a constant radius of curvature r.

**Figure 6A** is a perspective view of the exit 22 of the wire guiding unit 2 according to one embodiment in which the exit 22 is a nozzle comprising a cylindrical base, a prism and a cone, and in which the inner surface of the nozzle has a squared cross-section and it comprises a bevel joining said inner surface with the outer surface of the nozzle. For intelligibility purposes, a magnified sectional view of the nozzle is provided in **figure 6B**; in which the bevel of the inner surface is illustrated, said bevel having a zero radius of curvature on the other two sides (top and bottom), and a non-zero radius of curvature $r_L$, ro on two opposite sides of the squared cross-section (left and right side), the radius of curvature of the left side $r_L$ being smaller than the radius of curvature of the right side ro.

**Figure 7** is a perspective view illustrating the bending unit 3 of the present invention according to one particular embodiment in which the two wire bending members 31, 32 are rods perpendicularly protruding from a plate 33 capable of rotating around a vertical axis z, and wherein a motor 35 is configured to drive the plate 33 in rotation.

**Figure 8** is a schematic drawing representing a top view, on the plane P, of the wire guiding unit 2 and the wire bending unit 3 of the present device according to one embodiment, in which a rotation of the wire bending members 31, 32 of an angle α around the center of rotation C results in the bending of the wire proximate to the exit 22 of an angle β, wherein the bending angle β depends on (i) the angle α, (ii) the distance R between the center of rotation C and each wire bending member 32, 33 and (iii) the distance d between the center of rotation C and the exit 22.

**Figure 9** illustrates a three-dimensional archwire obtained with the present invention; the arrows indicate the interproximal spaces.

**Figure 10** is a perspective view of the wire bending unit 3 and the distal portion of the wire guiding unit 2 according to a particular embodiment in which the wire guiding unit comprises an hollow body 218 configured to deliver the wire to the exit 22, and in which the bending members 31, 32 are mounted on a rotating plate 33 and have the shape of a composite solid comprising a first cylinder, a truncated cone, and a second cylinder in a succession, so that the diameter of the bending members 31, 32 progressively decrease along the protruding direction.

**Figure 11** represents a perspective view of the wire bending unit 3 according to a particular embodiment in which the wire bending unit 3 comprises two bending members 31, 32 and a cutting member 34 for cutting the wire w delivered by the exit 22.

**Figure 12** is a top view illustrating two successive positions of the wire bending members 31, 32 and the cutting member 34 of the embodiment of **figure 11,** during a clockwise rotation of the plate 33.

**Figure 13** illustrates a 50X magnification of an extremity of an archwire cut with the cutting member 34 of **figures 11** and **12**.

**Claims**

1. Orthodontic wire bending device (1) comprising:

   - a wire guiding unit (2) comprising a convoying system for driving the wire (w) and an exit (22) for delivering the wire (w), the wire guiding unit being configured to guide the wire in a first direction along a longitudinal axis through the exit (22), and
   - a wire bending unit (3) fed by the wire delivered by the exit (22), comprising two wire bending members (31, 32), each wire bending member being able to turn around a center of rotation (C) in a first plane including the longitudinal axis, such that, when the wire comes out of the exit (22), a rotation of at least one of the bending members around the center of rotation results in the bending of the wire proximate to the nozzle,

   wherein the exit (22) of the wire guiding unit (2) is located, along the first direction, beyond the center of rotation (C).

2. Orthodontic wire bending device according to claim 1, wherein the exit (22) is a nozzle, preferably a removable nozzle.

3. Orthodontic wire bending device according to claim 1, configured such that a rotation of the bending members of an angle α results in the bending of the wire (w) of an angle β wherein the relationship between α and β is given by equation (e1):

$$\tan(\beta) = \frac{sin(\alpha)}{\cos(\alpha) - \frac{d}{R}} \quad (e1)$$

in which d is the distance between the center of rotation (C) and the exit (22), and R is the distance between the center of rotation (C) and each wire bending member (31, 32).

**4.** Orthodontic wire bending device (1) according to any one of claims 1 to 3, wherein the convoying system (21) is capable of rotating about the longitudinal axis, so as to rotate the wire (w) about the longitudinal axis.

**5.** Orthodontic wire bending device (1) according to any one of claims **1** to **4,** wherein the wire guiding unit (2) comprises a tube (214) configured to house and guide the wire (w).

**6.** Orthodontic wire bending device (1) according to claim **5,** wherein the tube (214) comprises:

a. an external cover, preferably made up of a metal or alloy material and
b. an inner sheath, preferably made up of a medical grade thermoplastic elastomer.

**7.** Orthodontic wire bending (1) device according to any one of claims **1** to **6,** wherein the exit (22) has an inner surface having an inner radius, an outer surface, and a bevel extending from the inner surface to outer surface, the bevel having a radius of curvature r which is equal or less than the inner radius Rt.

**8.** Orthodontic wire bending device (1) according to any one of claims **1** to **7,** wherein the wire bending unit (3) comprises a plate (33) capable of rotating about an axis of rotation perpendicular to the longitudinal axis, wherein the bending members (31, 32) protrude from said rotating plate (33).

**9.** Orthodontic wire bending device (1) according to any one of claims **1** to **8,** wherein the wire guiding unit (2) comprises a hollow body (218) having a proximal end and a distal end, the hollow body (218) being non-rotatably connected to the convoying system (21) and being configured to receive, at its proximal end, the wire (w) from the convoying system (21) and to guide it along the first direction towards the wire bending unit (3).

**10.** Orthodontic wire bending device (1) according to any one of claims **1** to **9,** wherein the wire bending members (31, 32) are bending rods.

**11.** Orthodontic wire bending device (1) according to claim **10,** wherein each bending rod has a diameter which decreases along the protruding direction, preferably each rod comprises a first part of frustoconical shape and a second free part of cylindrical shape.

**12.** Orthodontic wire bending device according to any one of claims **1** to **11,** wherein the wire bending unit (3) further comprises a wire cutting member (34), preferably the wire cutting member (34) is a rod having a flat surface (341).

**13.** Orthodontic wire bending system comprising:

g. an orthodontic wire bending device (1) according to any one of claims **1** to **12,** the orthodontic wire bending device (1) being responsive to control commands;
h. a driver assembly comprising a first driver (213) operably connected to the wire guiding unit (2) and configured to drive the wire in the guiding unit, and a second driver (35) operably connected to the wire binding unit (3) configured to drive in rotation the two bending members (32,33);
i. a programmable controller configured to send control commands to the drivers of the driver assembly, so as to operate the orthodontic bending device (1).

**14.** Orthodontic wire bending system according to claim **13,** further comprising a wire detection unit for detecting the presence of the wire (w), said wire detection unit being preferably installed between the exit of the wire guiding unit (2) and the wire bending unit (3).

**15.** A method of manufacturing an orthodontic archwire with the orthodontic wire bending device (1) according to any one of claims **1** to **12,** the method comprising:

- guiding the wire through the wire guiding unit (2) in a first direction along the longitudinal axis, and delivering the wire out of the wire guiding unit (2) through the exit (22);
- feeding the wire bending unit (3) with the wire (w) delivered from the exit (22);
- rotating the wire bending members (31, 32) of a predefined angle α around the center of rotation (C) so as to bend the wire (w).

PRIOR ART

1A 1B

**FIG. 1**

**FIG. 2**

FIG. 3

4A          4B

FIG. 4

**5A**

**5B**

**FIG. 5**

**6A**

**6B**

**FIG. 6**

FIG. 7

**FIG. 8**

**FIG. 9**

**FIG. 10**

**FIG. 11**

**12A**

**12B**

**FIG. 12**

**FIG. 13**

Europäisches
Patentamt

European
Patent Office

Office européen
des brevets

# EUROPEAN SEARCH REPORT

Application Number

EP 21 30 5387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2020 0074640 A (KOREA INST MACH & MATERIALS [KR]; YOAT [KR]) 25 June 2020 (2020-06-25) | 1-3,5-15 | INV. A61C7/20 B21F1/00 |
| A | * paragraph [0001] - paragraph [0211]; figures 1-10 * | 4 | |
| X | US 2017/312808 A1 (SUTO TONY [US] ET AL) 2 November 2017 (2017-11-02) * page 1 - page 8; figures 1A-5 * | 1-15 | |

TECHNICAL FIELDS
SEARCHED (IPC)

B21F
A61C
B21L

The present search report has been drawn up for all claims

| Place of search | Date of completion of the search | Examiner |
|---|---|---|
| Munich | 6 September 2021 | Wirth, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  ..................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 30 5387

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2021

| Patent document cited in search report | Publication date | Patent family member(s) | Publication date |
|---|---|---|---|
| KR 20200074640 A | 25-06-2020 | NONE | |
| US 2017312808 A1 | 02-11-2017 | EP 3238850 A1 | 01-11-2017 |
| | | ES 2760553 T3 | 14-05-2020 |
| | | US 2017312808 A1 | 02-11-2017 |

EPO FORM P0459

For more details about this annex : see Official Journal of the European Patent Office, No. 12/82